(19) Europäisches Patentamt
European Patent Office
Office européen des brevets

(11) **EP 4 632 257 A1**

(12) **EUROPÄISCHE PATENTANMELDUNG**

(43) Veröffentlichungstag:
**15.10.2025  Patentblatt 2025/42**

(21) Anmeldenummer: **24169589.9**

(22) Anmeldetag: **11.04.2024**

(51) Internationale Patentklassifikation (IPC):
*F16L 27/08* (2006.01)   *F16L 55/027* (2006.01)
*F16L 55/04* (2006.01)   *F16L 39/00* (2006.01)
*F16L 39/04* (2006.01)

(52) Gemeinsame Patentklassifikation (CPC):
**F16L 55/043; F16L 27/0808; F16L 39/005;**
**F16L 39/04; F16L 55/02772;** F16L 9/18;
F16L 27/0828; F16L 53/70

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(71) Anmelder: **Justenhoven, Barbara**
**70563 Stuttgart-Vaihingen (DE)**

(72) Erfinder: **Justenhoven Dr., Julius**
**70563 Stuttgart-Vaihingen (DE)**

(74) Vertreter: **Ruckh, Rainer Gerhard**
**Patentanwaltskanzlei Ruckh**
**Jurastraße 1**
**73087 Bad Boll (DE)**

(54) **DREHDURCHFÜHRUNG**

(57)  Die Erfindung betrifft eine Drehdurchführung (1) mit wenigstens zwei in Richtung deren Längsachse (L) koaxial angeordneten Drehführungskörpern (2, 2a, 2b, 3). An der äußeren Mantelfläche des inneren Drehführungskörpers (2, 2a, 2b) und an der inneren Mantelfläche des äußeren Drehführungskörpers (3) münden Kanalsegmente (4a, 4b) aus. Die Kanalsegmente (4a, 4b) des inneren und äußeren Drehführungskörpers (2, 2a, 2b, 3) sind zumindest teilweise überlappend ausgebildet, wodurch ein sich in Längsrichtung der Drehdurchführung (1) erstreckender schraubenförmiger Kanal (4) gebildet wird, in welchem ein Fluid geführt ist. Das Fluid wird im schraubenförmigen Kanal (4) transportiert in dem die Drehführungskörper (2, 2a, 2b, 3) relativ zueinander um die Längsachse (L) der Drehdurchführung (1) gedreht werden.

**Fig. 1**

**Beschreibung**

Die Erfindung betrifft eine Drehdurchführung.

Derartige Drehdurchführungen ermöglichen generell einem Fluid, d.h. einem Gas oder einer Flüssigkeit, einen Übergang zwischen einem feststehenden Körper und einem rotierenden Körper.

Typischerweise weist eine derartige Drehdurchführung ein feststehendes Gehäuse auf, in welchem eine drehende Hohlachse gelagert ist. Das Fluid wird über einen Anschluss in das Gehäuse geführt und von dort der drehenden Hohlachse zugeführt. Über einen Abnahmestutzen wird das Fluid aus der drehenden Hohlachse ausgeleitet.

Derartige Drehdurchführungen werden in unterschiedlichen industriellen Applikationen eingesetzt, insbesondere um ein Fluid zwischen einem feststehenden und einem rotierenden Maschinenteil zu übertragen.

Der Erfindung liegt die Aufgabe zugrunde eine Drehdurchführung mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Drehdurchführung mit wenigstens zwei in Richtung deren Längsachse koaxial angeordneten Drehführungskörpern.

An der äußeren Mantelfläche des inneren Drehführungskörpers und an der inneren Mantelfläche des äußeren Drehführungskörpers münden Kanalsegmente aus. Die Kanalsegmente des inneren und äußeren Drehführungskörpers sind zumindest teilweise überlappend ausgebildet, wodurch ein sich in Längsrichtung der Drehdurchführung erstreckender schraubenförmiger Kanal gebildet wird, in welchem ein Fluid geführt ist. Das Fluid wird im schraubenförmigen Kanal transportiert in dem die Drehführungskörper relativ zueinander um die Längsachse der Drehdurchführung gedreht werden.

Die erfindungsgemäße Drehdurchführung weist einen schraubenförmigen Kanal zwischen zwei Drehführungskörpern auf, in dem ein Fluid geführt wird. Durch die Drehung der Drehführungskörper mit unterschiedlichen Drehgeschwindigkeiten wirken Zentrifugalkräfte auf das im schraubenförmigen Kanal geführte Fluid, das von einem gasförmigen oder flüssigen Medium aber auch von einem fließfähigen Festkörpermedium gebildet sein kann.

Der Aufbau der erfindungsgemäßen Drehdurchführung ist generell derart, dass an dessen Eingangsbereich das Fluid dem schraubenförmigen Kanal zugeführt wir. Das Fluid wird an einem Ausgangsbereich der Drehdurchführung aus dieser ausgeleitet.

Das Fluid wird in dem sich in Längsrichtung der Drehdurchführung erstreckenden schraubenförmigen Kanal verlustarm übertragen, wobei wie bei bekannten Drehdurchführungen das Fluid von einem insbesondere feststehenden Teil auf ein rotierendes Teil übertragen werden kann.

Die Funktionalität der erfindungsgemäßen Drehdurchführung ist jedoch gegenüber dieser Grundfunktion erheblich erweitert.

Durch die auf das im schraubenförmigen Kanal geführte Fluid wirkenden Zentrifugalkräfte erfolgt eine verlustarme Übertragung des Drucks und Drehimpulses des Fluids, was zu einer Reduzierung von Verwirbelungen im Fluid und zu einer Reduzierung von Wandverlusten führt.

Die Zentrifugalkräfte drängen das Fluid im schraubenförmigen Kanal nach außen, wodurch Eigenbewegungen des Fluids, die zu turbulenten Strömungen führen, reduziert werden.

Eine zusätzliche Maßnahme zur Unterbindung turbulenter Strömungen kann vorteilhaft darin bestehen, dass die Kanalsegmente von glatten Wandsegmenten der Drehführungskörper begrenzt sind.

Durch die spiralförmige Ausbildung des schraubenförmigen Kanals entsteht bei der Führung des Fluids entsprechend einer hydraulischen Schraube eine Pumpwirkung, die den Durchfluss des Fluids aktiv unterstützt, so dass der Durchsatz des Fluids durch die Drehdurchführung erhöht wird.

Generell ist es hierbei vorteilhaft, den schraubenförmigen Kanal möglichst lang, d.h. mit möglichst vielen Spiralen auszubilden, wodurch diese vorteilhaften Effekte verstärkt sind.

Ein weiterer wesentlicher Aspekt der Erfindung besteht darin, dass durch die im schraubenförmigen Kanal auf das Fluid wirkenden Zentrifugalkräfte die erfindungsgemäße Drehdurchführung als Durchlaufzentrifuge genutzt werden kann. Diese Durchlaufzentrifuge kann in unterschiedlichen industriellen und medizintechnischen Applikationen zum Trennen von Komponenten im Fluid genutzt werden.

Die Größe und Form des schraubenförmigen Kanals der erfindungsgemäßen Drehdurchführung bestimmen die dynamischen Eigenschaften des Transports des Fluids und können applikationsspezifisch optimiert gewählt werden.

Dabei können insbesondere die Querschnitte des schraubenförmigen Kanals entsprechend gewählt werden.

Hierbei kann der Querschnitt des schraubenförmigen Kanals kreisförmig, elliptisch, polygonal oder sternförmig sein.

In einer konstruktiv einfachen Ausgestaltung ist der Querschnitt des schraubenförmigen Kanals über dessen Länge konstant.

Gemäß einer vorteilhaften Weiterbildung der Drehdurchführung kann deren schraubenförmiger Kanal auch mehrgängig ausgebildet sein.

Gemäß einer alternativen Ausgestaltung ist der Querschnitt des schraubenförmigen Kanals lokal verengt wodurch eine Düse gebildet ist.

Je nach Applikationsanforderung können Düsen eingangs- und/oder ausgangsseitig am schraubenförmigen Kanal vorhanden sein.

Durch eine Düse im schraubenförmigen Kanal kann im Fluid im Bereich hinter der Düse ein Impuls und damit ein zusätzliches mechanisches Drehmoment erzeugt werden, das dazu genutzt werden kann, den äußeren Drehführungskörper in eine Rotation zu versetzen.

Die Düse wandelt somit innere thermische Energie des Fluids in mechanische Rotationsenergie und kühlt das Fluid ab. Die Drehdurchführung kann somit auch als Kühlvorrichtung genutzt werden.

Generell kann durch lokale Variationen, insbesondere Verengungen des Querschnitts des schraubenförmigen Kanals der Druck und die Strömungsgeschwindigkeit des Fluids im schraubenförmigen Kanal gezielt vorgegeben werden.

Insbesondere kann durch eine eingangs- und ausgangsseitige Querschnittsverengung das Strömungsprofil und damit die räumliche Verteilung F(x) der im schraubenförmigen Kanal strömenden Flüssigkeit vorgegeben werden. Eine besonders geeignete Vorgabe von F (x) ist durch die Beziehung

$$F\,(x) = 1 - \cos^2(kx)$$

definiert, wobei

k = die Wellenanzahl mit k ='-' L

L = die Länge des schraubenförmigen Kanals

x = die Position von O bis L im schraubenförmigen Kanal ist

Gemäß einer vorteilhaften Ausführungsform ist im Eingangsbereich und Ausgangsbereich der Drehdurchführung jeweils eine Drehlagerung vorhanden. Mittels der Drehlagerung sind die Drehführungskörper gekoppelt, wobei die Drehlagerungen außerhalb des Bereichs des schraubenförmigen Kanals liegen.

Mit den Drehlagerungen ist der innere Drehführungskörper spielarm und nahezu reibungsfrei im äußeren Drehführungskörper gelagert.

Weiter vorteilhaft ist im Eingangsbereich und Ausgangsbereich der Drehdurchführung jeweils eine Dichtung vorhanden. Mittels der Dichtungen sind Nahtstellen zwischen den Drehführungskörpern abgedichtet, wobei die Dichtungen außerhalb des Bereichs des schraubenförmigen Kanals liegen.

Mit den Dichtungen gelingt eine zuverlässige und vollständige Abdichtung der Nahtstellen zwischen den Drehführungskörpern.

Wesentlich hierbei ist, dass sowohl die Drehlagerungen als auch die Dichtungen außerhalb des Bereichs des schraubenförmigen Kanals liegen. Damit wird insbesondere eine optimale Dichtwirkung erreicht, da die Dichtungen nicht in den Bereich der Kanalsegmente der Drehführungskörper ragen.

Im einfachsten Fall bilden die Drehführungskörper hohlzylindrische Körper, so dass der Querschnitt der Drehdurchführung über deren gesamte Länge konstant ist.

Gemäß einer vorteilhaften Weiterbildung kann sich der Abstand des schraubenförmigen Kanals zur Längsachse der Drehdurchführung kontinuierlich verändern. Beispielsweise kann die Drehdurchführung dann eine konische Form aufweisen.

Für den Fall, dass sich die Drehdurchführung vom Eingang zum Ausgang hin verbreitert, wird durch die positive Steigung des schraubenförmigen Kanals eine Funktion der Drehdurchführung als Kompressor für das Fluid erhalten.

Für den Fall, dass sich die Drehdurchführung vom Eingang zum Ausgang hin verschmälert, erfüllt die Drehdurchführung die Funktion eines Expanders.

Gemäß einer vorteilhaften Weiterbildung sind bei der Drehdurchführung mehrere schraubenförmige Kanäle zwischen jeweils zwei Drehführungskörpern vorhanden.

Beispielsweise kann die Drehdurchführung mehrere schraubenförmige Kanäle in unterschiedlichen Abständen zur Längsachse der Drehdurchführung aufweisen, wobei hierzu mehr als zwei konzentrisch angeordnete, mit unterschiedlichen Drehzahlen rotierenden Drehführungskörpern vorgesehen sein können.

Gemäß einer besonders vorteilhaften Ausgestaltung sind mehrere innere Drehführungskörper in einem äußeren Drehführungskörper in axialer Richtung der Drehdurchführung in Abstand zueinander liegend angeordnet. Dadurch ist eine Reihenschaltung von schraubenförmigen Kanälen gebildet.

Dabei ist im Bereich eines ausgangsseitigen inneren Drehführungskörpers der Querschnitt des mit diesem Drehführungskörper gebildeten schraubenförmigen Kanals lokal verengt.

Durch die lokale Verengung des schraubenförmigen Kanals wird eine Düse gebildet, die einen Drehimpuls auf den äußeren Drehführungskörper überträgt, wodurch der äußere Drehführungskörper in eine Rotation um die Längsachse der Drehdurchführung versetzt wird.

Die Erfindung wird im Folgenden anhand der Zeichnungen erläutert. Es zeigen:

Figur 1: Erstes Ausführungsbeispiel der erfindungsgemäßen Drehdurchführung.

Figur 2: Funktionsdiagramm für die Drehdurchführung gemäß Figur 1.

Figur 3: Zweites Ausführungsbeispiel der erfindungsgemäßen Drehdurchführung.

Figur 4: Drittes Ausführungsbeispiel der erfindungsgemäßen Drehdurchführung.

Figur 5: Viertes Ausführungsbeispiel der erfindungsgemäßen Drehdurchführung.

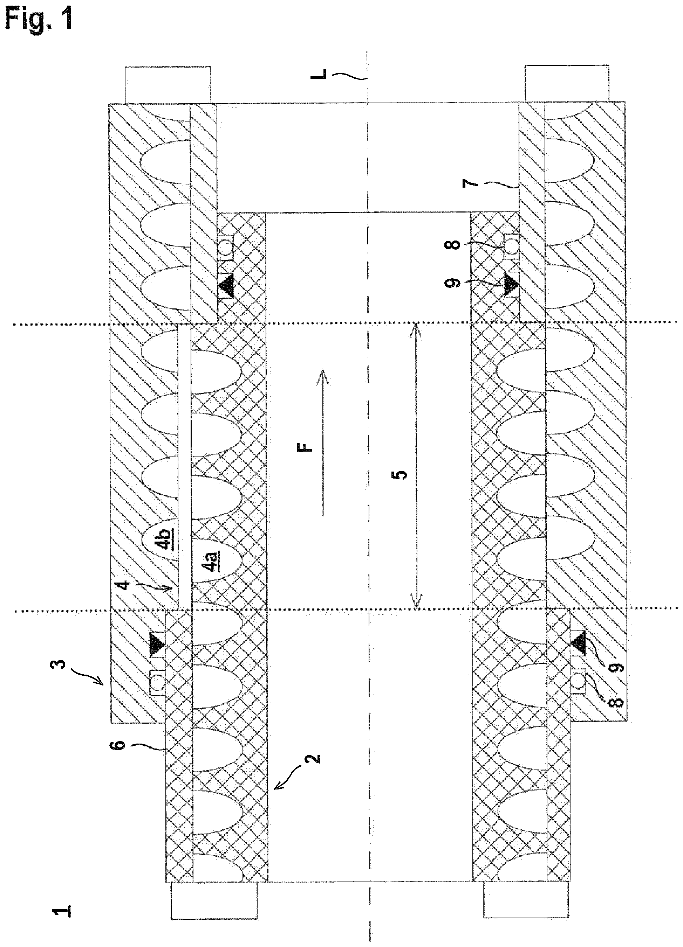

Figur 1 zeigt ein Ausführungsbeispiel der erfindungsgemäßen Drehdurchführung 1.

Die Drehdurchführung 1 weist zwei koaxial zur Längsachse L der Drehdurchführung 1 angeordnete Drehführungskörper 2, 3 auf. Die Drehführungskörper 2, 3 sind im vorliegenden Fall jeweils in Form von Hohlzylindern gebildet, so dass der Querschnitt der Drehdurchführung 1 über deren Länge konstant ist.

Der innere Drehführungskörper 2 liegt im Hohlraum des äußeren Drehführungskörpers 3, so dass der innere Drehführungskörper 2 spielarm im äußeren Drehführungskörper 3 geführt ist. Dabei liegt die äußere Mantelfläche des inneren Drehführungskörpers 2 direkt und in geringem konstantem Abstand der inneren Mantelfläche des äußeren Drehführungskörpers 3 gegenüber.

An der äußeren Mantelfläche des inneren Drehführungskörpers 2 ausmündend sind erste Kanalsegmente 4a vorhanden, die wie Figur 1 zeigt, halbkreisförmige Querschnitte aufweisen. Die Kanalsegmente 4a sind Bestandteil einer spiralförmigen Struktur, die sich in Längsrichtung der Drehdurchführung 1 erstreckt. Korrespondierend hierzu sind an der inneren Mantelfläche des äußeren Drehführungskörpers 3 ausmündend zweite Kanalsegmente 4b vorhanden, die dieselbe Geometrie wie die ersten Kanalsegmente 4a aufweisen und sich ebenfalls sich in Längsrichtung der Drehdurchführung 1 erstrecken.

Wie Figur 1 zeigt überlappen die ersten Kanalsegmente 4a und zweiten Kanalsegmente 4b in einem Kopplungsbereich 5 und ergänzen sich somit zu einem schraubenförmigen Kanal 4, der sich in Längsrichtung der Drehdurchführung 1 erstreckt.

In diesem schraubenförmigen Kanal 4 wird erfindungsgemäß ein nicht dargestelltes Fluid geführt, das von einem gasförmigen oder flüssigen Medium oder auch einem fließfähigen Festkörpermaterial gebildet sein kann. Die Fließrichtung des Fluids ist in Figur 1 mit dem mit F bezeichneten Pfeil gekennzeichnet.

Das Fluid wird in einem Eingangsbereich 6 in den schraubenförmigen Kanal 4 eingeleitet und in einem Ausgangsbereich 7 aus dem schraubenförmigen Kanal 4 ausgeleitet.

Die Drehführungskörper 2, 3 rotieren mit unterschiedlichen Drehgeschwindigkeiten jeweils um die Längsachse L der Drehdurchführung 1, wobei hierzu ein geeigneter, nicht dargestellter Antrieb vorgesehen ist.

Insbesondere kann der innere Drehführungskörper 2 auch stillstehen, so dass sich nur der äußere Drehführungskörper 3 dreht.

Im Eingangsbereich 6 und im Ausgangsbereich 7 und damit außerhalb des Bereichs des schraubenförmigen Kanals 4 ist jeweils eine Drehlagerung 8 vorhanden, die die Drehbarkeit der Drehführungskörper 2, 3 relativ zueinander ermöglicht.

Weiterhin ist sowohl im Eingangsbereich 6 als auch im Ausgangsbereich 7 eine Dichtung 9 vorgesehen, die Nahtstellen zwischen den Drehführungskörpern 2, 3 außerhalb des Bereichs des schraubenförmigen Kanals 4 abdichtet.

Durch die Drehung der Drehführungskörper 2, 3 relativ zueinander wirken auf das Fluid Zentrifugalkräfte, die die Entstehung von turbulenten Strömungen verhindern bzw. vermindern, wodurch ein verlustarmer Transport des schraubenförmigen Kanals 4 durch die Drehdurchführung 1 gewährleistet ist. Dieser Effekt kann dadurch noch verstärkt werden, dass die Kanalsegmente 4a, 4b von glatten Wandsegmenten der Drehführungskörper 2, 3 begrenzt sind.

Mit der erfindungsgemäßen Drehdurchführung 1 wird die bekannte Grundfunktion derart realisiert, dass das Fluid von einem feststehenden Teil auf ein sich bewegendes Teil transferiert wird.

Als weitere Funktion wird mit der Drehdurchführung 1 eine Zentrifuge bereitgestellt, da auf das Fluid im schraubenförmigen Kanal 4 Zentrifugalkräfte wirken.

Bei der Ausführungsform der Figur 1 weist der schraubenförmige Kanal 4 eine über eine Länge konstanten Querschnitt auf. Dabei kann der Querschnitt des schraubenförmigen Kanals 4 kreisförmig, elliptisch, polygonal oder sternförmig sein.

Die Funktionalität der Drehdurchführung 1 kann dadurch noch erweitert sein, wenn der Querschnitt des schraubenförmigen Kanals 4 lokal verengt ist wodurch eine Düse gebildet ist.

Dabei können Düsen eingangs- und/oder ausgangsseitig am schraubenförmigen Kanal 4 vorhanden sein.

Durch die Düse wird mit dem Fluid ein Drehmoment erzeugt, das den äußeren Drehführungskörper 3 in eine Rotationsenergie versetzt. Die so erzeugte mechanische Energie kann für unterschiedliche Applikationen genutzt werden.

Durch die Umwandlung von thermischer Energie des Fluids in mechanische Rotationsenergie kühlt das Fluid ab, was ebenfalls für unterschiedliche Applikationen genutzt werden kann.

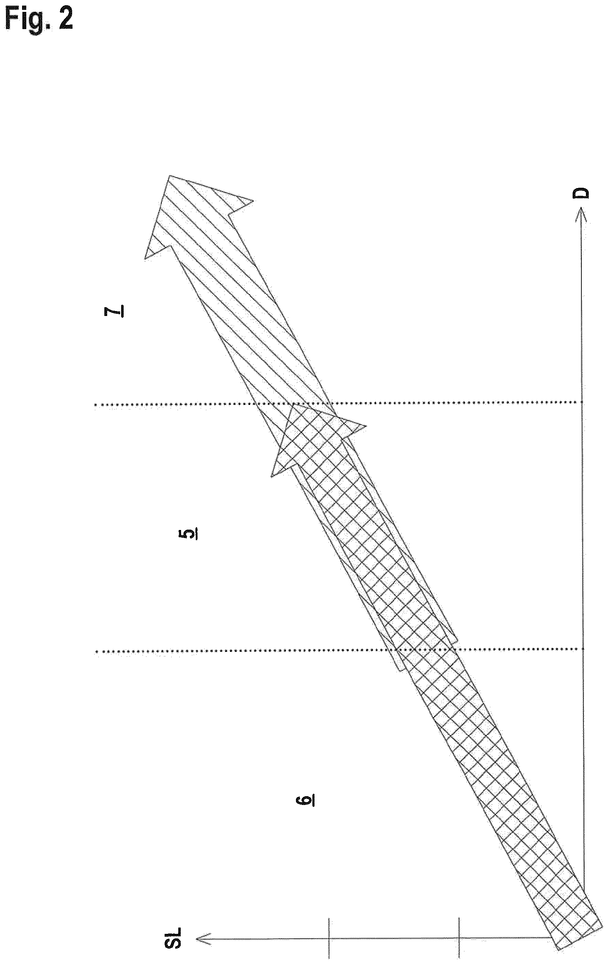

Figur 2 zeigt ein Funktionsdiagramm für die Drehdurchführung 1 gemäß Figur 1. Dabei zeigt Figur 2 die Abwicklung der schraubenförmigen Kanalsegmente 4a, 4b. Im Diagramm von Figur 2 ist als Abszisse die Drehachse D der Drehdurchführung 1 und als Ordinate die Schraubenlänge SL der Kanalsegmente 4a, 4b aufgetragen.

Figur 2 zeigt die Einteilung der Drehdurchführung 1 in den Eingangsbereich 6, den Kopplungsbereich 5 und den Ausgangsbereich 7. Wie mit den Pfeilen in Figur 2 veranschaulicht erfährt das vom Eingangsbereich 6 zum Ausgangsbereich 7 im schraubenförmigen Kanal 4 fließende Fluid im Kopplungsbereich 5 eine Beschleunigung. Dies führt zu einer Veränderung im lokalen Druck und des Impulses des Fluids.

Hochfrequente Impulse breiten sich im Medium als störende Druckwellen aus und werden in Wärme umgewandelt. Dieser Effekt kann durch eine geeignete Dimensionierung der Drehdurchführung 1, insbesondere des schraubenförmigen Kanals 4 minimiert werden.

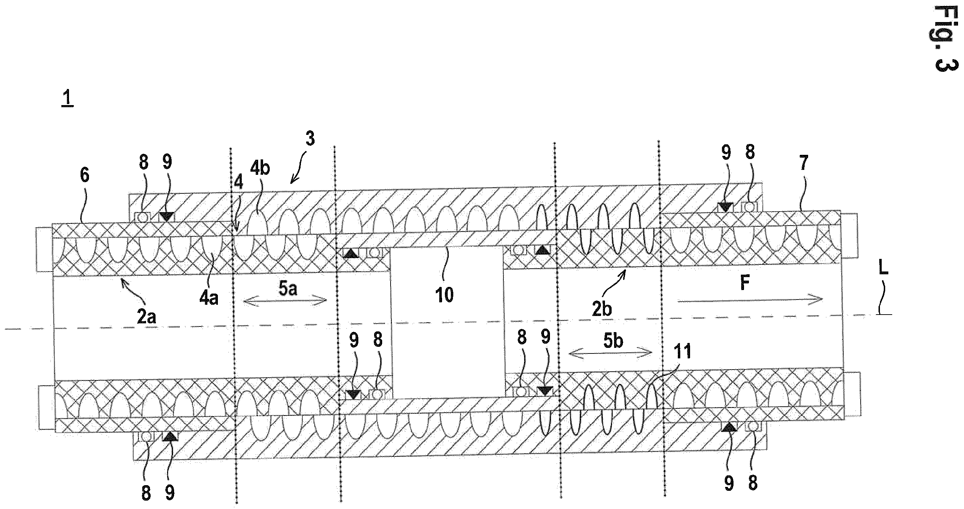

Figur 3 zeigt ein Ausführungsbeispiel der Drehdurchführung 1, welche eine Erweiterung der Ausführungsform der Figur 1 dahingehend ist, dass in dem äußeren Drehführungskörper 3 zwei innere Drehführungskörper 2a, 2b gelagert sind.

Die inneren Drehführungskörper 2a, 2b liegen koaxial zur Längsachse L der Drehdurchführung 1 in Abstand zueinander. Die Kanalsegmente 4a der inneren Drehführungskörper 2a, 2b bilden jeweils mit Abschnitten des Kanalsegments 4b des äußeren Drehführungskörpers 3 schraubenförmige Kanäle 4. Die entsprechenden Kopplungsbereiche 5a, 5b sind im vorliegenden Fall identisch. Die Fließrichtung des Fluids ist wieder mit F bezeichnet.

Der Bereich der Kanalsegmente 4a der äußeren Drehführungskörper 3 ist im Bereich zwischen den inneren Drehführungskörpern 2a, 2b mit einer Hülse 10 abgeschlossen.

Die Drehführungskörper 2a, 2b, 3 entsprechen hinsichtlich ihres Aufbaus im Wesentlichen den Drehführungskörpern 2, 3 der Drehdurchführung 1 gemäß Figur 1. Insbesondere sind zwischen den Drehführungskörpern 2a, 2b und dem Drehführungskörper 3 wieder Drehlagerungen 8 und Dichtungen 9 vorgesehen. An dem vorderen inneren Drehführungskörper 2a befindet sich der Eingangsbereich 6 der Drehdurchführung 1. An dem hinteren inneren Drehführungskörper 2b befindet sich der Ausgangsbereich 7 der Drehdurchführung 1.

Während die Querschnitte der Kanalsegmente 4a des vorderen Drehführungskörpers 2a konstant sind (wie auch die dort zugeordneten Kanalsegmente 4a des äußeren Drehführungskörpers 3) ist bei dem hinteren Drehführungskörper 2b eine Querschnittsverengung 11 der Kanalsegmente 4a vorhanden und korrespondierend hierzu auch im Bereich der gegenüberliegenden Kanalsegmente 4b des äußeren Drehführungskörpers 3. Ansonsten sind die inneren Drehführungskörper 2a, 2b identisch.

Mit dieser Querschnittsverengung 11 wird eine Düse gebildet. Die Düse beschleunigt das Fluid an deren Ausgang und erzeugt ein Drehmoment, das den äußeren Drehführungskörper 3 in eine Drehbewegung versetzt. Durch diese Umwandlung von thermischer Energie des Fluids in mechanische Rotationsenergie kühlt das Medium ab.

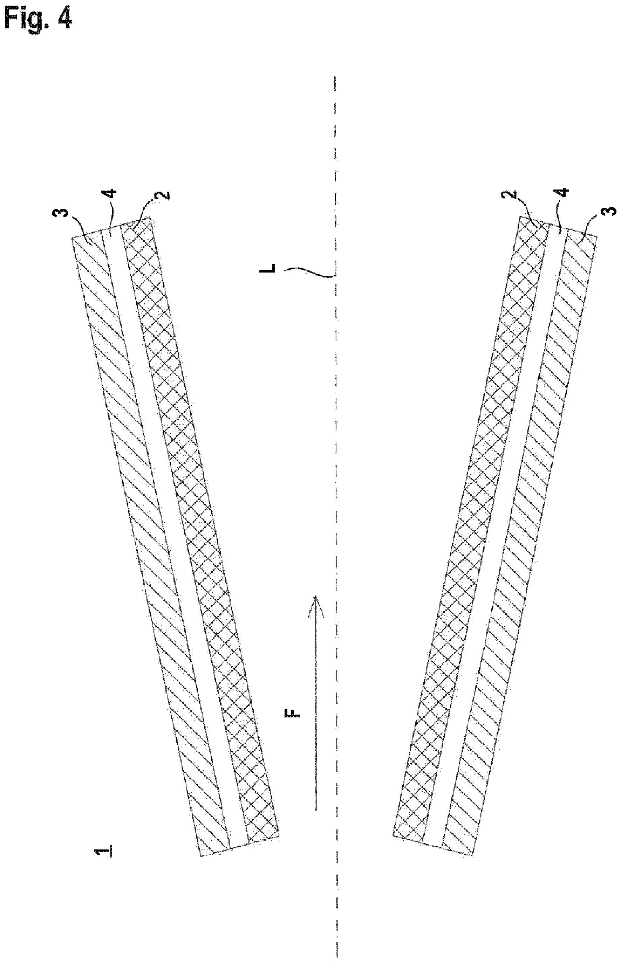

Figur 4 zeigt ein weiteres Ausführungsbeispiel der Drehdurchführung 1.

Diese Drehdurchführung 1 unterscheidet sich von der Ausführungsform gemäß Figur 1 nur dadurch, dass die Drehführungskörper 2, 3 der Drehdurchführung 1 eine konische Anordnung bilden, d.h. die Drehdurchführung 1 verbreitert sich in Fließrichtung F des Fluids kontinuierlich. Dadurch wirkt die Drehdurchführung 1 für das Fluid als Kompressor. Bei umgekehrter Fließrichtung F bildet die Drehdurchführung 1 einen Expander.

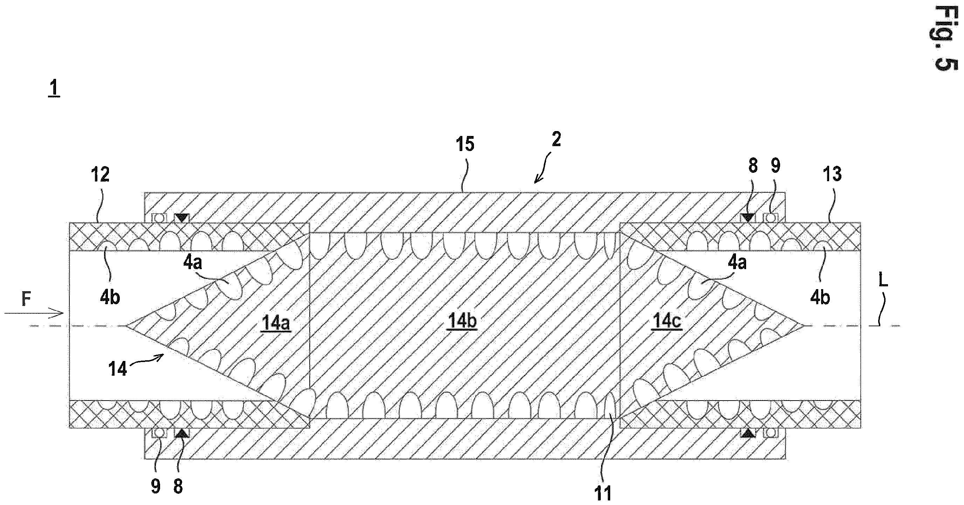

Figur 5 zeigt ein weiteres Ausführungsbeispiel der erfindungsgemäßen Drehdurchführung 1.

Die Drehdurchführung 1 gemäß Figur 5 weist ein feststehendes Eingangsteil 12 und ein feststehendes Ausgangsteil 13 auf, die einem äußeren Drehführungskörper 3 entsprechen. Das Eingangsteil 12 und das Ausgangsteil 13 sind hohlzylindrisch ausgebildet, wobei an deren inneren Mantelflächen spiralförmig verlaufende Kanalsegmente 4b vorhanden sind.

Im Eingangsteil 12 und Ausgangsteil 13 ist ein innerer Drehführungskörper 2 drehbar um die Längsachse L der Drehdurchführung 1 gelagert. Der innere Drehführungskörper 2 weist ein torpedoförmiges Innenteil 14 bestehend aus einem zylindrischen Mittelteil 14b und zwei konischen Endteilen 14a, 14c auf, an deren äußeren Mantelflächen Kanalsegmenten 4a vorhanden sind.

An der äußeren Mantelfläche des Mittelteils 14b ist eine zylindrische Hülse 15 befestigt, die Bestandteil des inneren Drehführungskörpers 2 ist.

Analog zu den Ausführungsformen der Figuren 1 bis 3 ist die Hülse 15 über jeweils eine Dichtung 9 und eine Drehlagerung 8 drehbar an das Eingangsteil 12 und das Ausgangsteil 13 angekoppelt.

An der Ausgangsseite des Mittelteils 14b ist eine Querschnittsverengung 11 der Kanalsegmente 4a vorhanden, die eine Düse bildet.

Das Fluid durchströmt die Drehdurchführung 1 gemäß Figur 5 in Fließrichtung F. Durch die Strömung des Fluids in den Kanalsegmenten 4a, 4b wird der innere Drehführungskörper 2 in eine Rotation um die Längsachse L versetzt. Dadurch wird dem Fluid Energie entzogen. Die Rotationsenergie des inneren Drehführungskörpers 2 kann in elektrische Energie umgewandelt werden.

Durch die Düse wird die Rotation des inneren Drehführungskörpers 2 verstärkt, da sich dort das Fluid vor der Düse aufstaut und nach der Düse beschleunigt wird.

Bezugszeichenliste

| | |
|---|---|
| (1) | Drehdurchführung |
| (2, 2a, 2b) | innere Drehführungskörper |
| (3) | äußere Drehführungskörper |
| (4) | schraubenförmiger Kanal |
| (4a, 4b) | Kanalsegment |
| (5) | Kopplungsbereich |
| (5a, 5b) | Kopplungsbereich |
| (6) | Eingangsbereich |
| (7) | Ausgangsbereich |
| (8) | Drehlagerung |
| (9) | Dichtung |
| (10) | Hülse |
| (11) | Querschnittsverengung |

(12) Eingangsteil
(13) Ausgangsteil
(14) Innenteil
(14a) Endteil
(14b) Mittelteil
(14c) Endteil
(15) Hülse

(D) Drehachse
(F) Fließrichtung
(L) Längsachse
(SL) Schraubenlänge

**Patentansprüche**

1. Drehdurchführung (1) **gekennzeichnet durch** wenigstens zwei in Richtung deren Längsachse (L) koaxial angeordnete Drehführungskörper (2, 2a, 2b, 3), wobei an der äußeren Mantelfläche des inneren Drehführungskörpers (2, 2a, 2b) und an der inneren Mantelfläche des äußeren Drehführungskörpers (3) ausmündende Kanalsegmente (4a, 4b) vorhanden sind, wobei die Kanalsegmente (4a, 4b) des inneren und äußeren Drehführungskörpers (2, 2a, 2b, 3) zumindest teilweise überlappend ausgebildet sind, wodurch ein sich in Längsrichtung der Drehdurchführung (1) erstreckender schraubenförmiger Kanal (4) gebildet ist, in welchem ein Fluid geführt ist, wobei das Fluid im schraubenförmigen Kanal (4) transportiert wird in dem die Drehführungskörper (2, 3) relativ zueinander um die Längsachse (L) der Drehdurchführung (1) gedreht werden.

2. Drehdurchführung (1) nach Anspruch 1, **dadurch gekennzeichnet, dass** an deren Eingangsbereich (6) das Fluid dem schraubenförmigen Kanal (4) zugeführt wird, und dass das Fluid an einem Ausgangsbereich (7) der Drehdurchführung (1) ausgeleitet wird.

3. Drehdurchführung (1) nach einem der Ansprüche 1 oder 2, **dadurch gekennzeichnet, dass** das Fluid ein gasförmiges, flüssiges oder festes Medium ist.

4. Drehdurchführung (1) nach einem der Ansprüche 1 bis 3, **dadurch gekennzeichnet, dass** in deren Eingangsbereich (6) und Ausgangsbereich (7) jeweils eine Drehlagerung (8) vorhanden ist, wobei mittels der Drehlagerung (8) die Drehführungskörper (2, 3) gekoppelt sind, wobei die Drehlagerungen (8) außerhalb des Bereichs des schraubenförmigen Kanals (4) liegen.

5. Drehdurchführung (1) nach einem der Ansprüche 1 bis 4, **dadurch gekennzeichnet, dass** in deren Eingangsbereich (6) und Ausgangsbereich (7) jeweils eine Dichtung (9) vorhanden ist, wobei mittels der Dichtungen (9) Nahtstellen zwischen den Drehführungskörpern (2, 2a, 2b, 3) abgedichtet sind, wobei die Dichtungen (9) außerhalb des Bereichs des schraubenförmigen Kanals (4) liegen.

6. Drehdurchführung (1) nach einem der Ansprüche 1 bis 5, **dadurch gekennzeichnet, dass** der Querschnitt des schraubenförmigen Kanals (4) kreisförmig, elliptisch, polygonal oder sternförmig ist.

7. Drehdurchführung (1) nach Anspruch 6, **dadurch gekennzeichnet, dass** der Querschnitt des schraubenförmigen Kanals (4) über dessen Länge konstant ist.

8. Drehdurchführung (1) nach Anspruch 6, **dadurch gekennzeichnet, dass** der Querschnitt des schraubenförmigen Kanals (4) lokal verengt ist wodurch eine Düse gebildet ist.

9. Drehdurchführung (1) nach Anspruch 8, **dadurch gekennzeichnet, dass** Düsen eingangs- und/oder ausgangsseitig am schraubenförmigen Kanal (4) vorhanden sind.

10. Drehdurchführung (1) nach einem der Ansprüche 1 bis 9, **dadurch gekennzeichnet, dass** die Kanalsegmente (4a, 4b) von glatten Wandsegmenten der Drehführungskörper (2, 2a, 2b, 3) begrenzt sind.

11. Drehdurchführung (1) nach einem der Ansprüche 1 bis 10, **dadurch gekennzeichnet, dass** der schraubenförmige Kanal (4) mehrgängig ausgebildet ist.

12. Drehdurchführung (1) nach einem der Ansprüche 1 bis 11, **dadurch gekennzeichnet, dass** der Abstand des schraubenförmigen Kanals (4) zur Längsachse (L) der Drehdurchführung (1) konstant ist oder sich kontinuierlich ändert.

13. Drehdurchführung (1) nach einem der Ansprüche 1 bis 12, **dadurch gekennzeichnet, dass** mehrere schraubenförmige Kanäle (4) zwischen jeweils zwei Drehführungskörpern (2, 3) vorhanden sind.

14. Drehdurchführung (1) nach einem der Ansprüche 1 bis 13, **dadurch gekennzeichnet, dass** mehrere innere Drehführungskörper (2a, 2b) in einem äußeren Drehführungskörper (3) in axialer Richtung der Drehdurchführung (1) in Abstand zueinander liegend angeordnet sind, wodurch eine Reihenschaltung von schraubenförmigen Kanälen (4) gebildet ist.

15. Drehdurchführung (1) nach Anspruch 14, **dadurch gekennzeichnet, dass** im Bereich eines ausgangsseitigen inneren Drehführungskörpers (2a, 2b) der Querschnitt des mit den Drehführungskörpern (2a, 2b, 3) gebildeten schraubenförmigen Kanals (4) lo-

kal verengt ist.

EP 4 632 257 A1

**Fig. 1**

8

# Fig. 2

**Fig. 3**

## Fig. 4

Fig. 5

EP 4 632 257 A1

Europäisches
Patentamt
European
Patent Office
Office européen
des brevets

**EUROPÄISCHER RECHERCHENBERICHT**

Nummer der Anmeldung

EP 24 16 9589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 222 594 A (SKINNER HARCOURT J) 16. September 1980 (1980-09-16) | 1-8,10, 12-15 | INV. F16L27/08 |
| A | * Spalte 3, Zeile 34 - Spalte 5, Zeile 9; Abbildungen * | 9 | F16L55/027 F16L55/04 |
| | - - - - - | | F16L39/00 |
| X | US 3 866 670 A (CRAMER CHRISTOPH ET AL) 18. Februar 1975 (1975-02-18) * Spalte 3, Zeile 50 - Spalte 4, Zeile 20; Abbildungen * | 1,11 | F16L39/04 |
| | - - - - - | | |
| A | US 5 497 809 A (WOLF LAWRENCE W [US]) 12. März 1996 (1996-03-12) * Spalte 8, Zeile 55 - Zeile 64; Abbildungen * | 1 | |
| | - - - - - | | |

**RECHERCHIERTE SACHGEBIETE (IPC)**

F16L

Der vorliegende Recherchenbericht wurde für alle Patentansprüche erstellt

| Recherchenort | Abschlußdatum der Recherche | Prüfer |
|---|---|---|
| München | 3. September 2024 | dall'Amico, Mauro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 24 16 9589

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-09-2024

| Im Recherchenbericht angeführtes Patentdokument | Datum der Veröffentlichung | Mitglied(er) der Patentfamilie | Datum der Veröffentlichung |
|---|---|---|---|
| US 4222594 A | 16-09-1980 | KEINE | |
| US 3866670 A | 18-02-1975 | KEINE | |
| US 5497809 A | 12-03-1996 | KEINE | |

EPO FORM P0461

Für nähere Einzelheiten zu diesem Anhang : siehe Amtsblatt des Europäischen Patentamts, Nr.12/82